# EUROPEAN PATENT SPECIFICATION

(11) **EP 3 696 472 B1**
(45) Date of publication and mention of the grant of the patent: **03.04.2024**
(21) Application number: 20156860.7
(22) Date of filing: 12.02.2020
(51) Int. Cl.: F24F 11/46, F24F 11/48, F24F 11/54, F24F 11/56, F24F 11/64, F24F 11/65, G05B 15/02, G05D 23/19, G06Q 10/04, F24F 120/14, F24F 140/60

(54) **OPERATION PLANNING METHOD, OPERATION CONTROL DEVICE, AND OPERATION PLANNING SYSTEM**
BETRIEBSPLANUNGSVERFAHREN, BETRIEBSSTEUERVORRICHTUNG UND BETRIEBSPLANUNGSSYSTEM
PROCÉDÉ DE PLANIFICATION D'OPÉRATION, DISPOSITIF DE COMMANDE D'OPÉRATION ET SYSTÈME DE PLANIFICATION D'OPÉRATION

(30) Priority: 18.02.2019 JP 2019026820
(43) Date of publication of application: 19.08.2020
(73) Proprietor: Panasonic Intellectual Property Management Co., Ltd., Osaka-shi, Osaka 540-6207 (JP)
(72) Inventor: HIROMOTO, Masaki, Osaka, 540-6207 (JP); YOSHIDA, Atsushi, Osaka, 540-6207 (JP); YAMAGUCHI, Takao, Osaka, 540-6207 (JP)
(74) Representative: Eisenführ Speiser

(56) References cited:
- EP-A1- 2 343 485
- WO-A1-2019/018627
- JP-A- 2015 183 899
- JP-A- 2016 085 014
- JP-A- 2016 176 644

## Description

### BACKGROUND OF THE INVENTION

### Field of the Invention

The present invention relates to an operation planning method, an operation control device, and an operation planning system.

### Description of the Related Art

There has been known air conditioning control performed considering movement of a person. For example, Japanese Patent Laid-Open No. 2016-85014 (Patent Literature 1) discloses an air conditioning control method for predicting a movement of a target person at future time based on movement information of the target person to create predicted movement information and generating air conditioning control information for controlling an air conditioner based on the created predicted movement information.

However, when a person is detected by a sensor to control an air conditioner, the control of the air conditioner is likely to be delayed. A user's comfort is sometimes spoiled.

### SUMMARY OF THE INVENTION

The present invention solves the problems in the past and an object of the present invention is to suitably control an air conditioner and suppress deterioration in comfort.

In order to achieve the object, an operation planning method of the present invention is an operation planning method for generating an operation plan for a plurality of air conditioners for each of a plurality of zones in a room, the plurality of air conditioners and the plurality of zones being associated with each other, the operation planning method including: a step of acquiring operation result data indicating operation results of the plurality of air conditioners; a step of acquiring schedule data in which a schedule of a meeting is registered and a number of participants in the meeting; a step of determining, based on the schedule data and the operation result data, a zone where the scheduled meeting registered in the schedule data is held; a step of determining, based on a number of participants in the meeting held in the determined zone, whether an operation state of the air conditioner associated with the determined zone is set to an energy saving operation state in which power consumption of the air conditioner is reduced or a normal operation state in which the power consumption is not reduced; a step of generating parameters for controlling the air conditioner, the parameters corresponding to the determined operation state; and a step of transmitting the generated parameters to the air conditioner associated with the determined zone.

Consequently, the zone where the scheduled meeting is held is determined based on the schedule data and the operation result data. The parameters for controlling the air conditioner associated with the determined zone are generated and transmitted to the associated air conditioner. Therefore, it is possible to suitably control the operation state of the air conditioner corresponding to the zone where the scheduled meeting is held and suppress deterioration in comfort in the zone where the scheduled meeting is held.

In the operation planning method of the present invention, the zone where the scheduled meeting is held is determined based on the schedule data and the operation result data. The parameters for controlling the air conditioner associated with the determined zone are generated and transmitted to the associated air conditioner. Therefore, it is possible to suitably control the operation state of the air conditioner corresponding to the zone where the scheduled meeting is held and suppress deterioration in comfort in the zone where the scheduled meeting is held.

### BRIEF DESCRIPTION OF THE DRAWINGS

FIG. 1 is a system configuration diagram of an operation planning system;
FIG. 2 is a diagram showing a correspondence relation between air conditioners and air conditioning zones;
FIG. 3 is a diagram showing an example of disposition of tables in an air conditioning zone;
FIG. 4 is a block diagram showing the configuration of a terminal device;
FIG. 5 is a block diagram showing the configuration of an air conditioning control device;
FIG. 6 is a diagram showing an example of a schedule management table;
FIG. 7 is a diagram showing an example of an operation result management table;
FIG. 8 is a diagram showing an example of a user information management table;
FIG. 9 is a diagram showing an example of a layout of a target space;
FIG. 10 is a diagram showing an example of a priority table;
FIG. 11 is a flowchart showing the operation of the air conditioning control device; and
FIG. 12 is a diagram showing a priority changing screen.

### DETAILED DESCRIPTION OF THE PREFERRED EMBODIMENT

A first invention is an operation planning method for generating an operation plan for a plurality of air conditioners for each of a plurality of zones in a room, the plurality of air conditioners and the plurality of zones being associated with each other, the operation planning method including: a step of acquiring operation result data indicating operation results of the plurality of air conditioners; a step of acquiring schedule data in which a schedule of a meeting is registered and a number of participants in the meeting; a step of determining, based on the schedule data and the operation result data, a zone where the scheduled meeting registered in the schedule data is held; a step of determining, based on a number of participants in the meeting held in the determined zone, whether an operation state of the air conditioner associated with the determined zone is set to an energy saving operation state in which power consumption of the air conditioner is reduced or a normal operation state in which the power consumption is not reduced; a step of generating parameters for controlling the air conditioner, the parameters corresponding to the determined operation state; and a step of transmitting the generated parameters to the air conditioner associated with the determined zone.

Consequently, the zone where the scheduled meeting is held is determined based on the schedule data and the operation result data. The parameters for controlling the air conditioner associated with the determined zone are generated and transmitted to the associated air conditioner. Therefore, it is possible to suitably control the operation state of the air conditioner corresponding to the zone where the scheduled meeting is held and suppress deterioration in comfort in the zone where the scheduled meeting is held.

In a second invention, the step of determining the zone may include: acquiring, from the schedule data in past, numbers of participants in meetings held in the past; detecting a held meeting, a number of participants in which is same as a number of prospective participants in the scheduled meeting or a difference between the number of participants in which and the number of prospective participants is within a preset range; and determining, as the zone where the scheduled meeting is held, a zone where the detected held meeting was held.

Consequently, the zone where the meeting held in the past, the number of participants in which is the same as the number of prospective participants in the scheduled meeting or the difference between the number of participants in which and the number of prospective participants is within the preset range, was held can be determined as the zone where the meeting is held. Therefore, by controlling the air conditioner based on the operation result data of the air conditioner associated with the zone where the meeting was held, it is possible to suppress deterioration in comfort in the zone where the scheduled meeting is held.

In a third invention, the step of determining the operation state of the air conditioner may include: determining the operation state of the air conditioner as the energy saving operation state when the number of prospective participants in the scheduled meeting is smaller than a preset threshold; and determining the operation state of the air conditioner as the normal operation state when the number of prospective participants is equal to or larger than the threshold.

Consequently, the operation state of the air conditioner can be determined as the energy saving operation state or the normal operation state based on the number of prospective participants in the scheduled meeting. Therefore, when the number of prospective participants in the scheduled meeting is small, it is possible to reduce the power consumption by setting the air conditioner in the energy saving operation state. When the number of prospective participants in the scheduled meeting is large, by setting the air conditioner in the normal operation state, it is possible to suppress deterioration in comfort in the zone where the meeting is held.

In a fourth invention, the operation planning method may further include a step of notifying a meeting place in the zone determined in the step of determining the zone to terminal devices carried by the participants in the meeting.

Consequently, it is possible to notify the meeting place where the meeting is held to prospective participants in the scheduled meeting.

In a fifth invention, the schedule data may include attribute data indicating an attribute of the meeting, and the step of determining the zone may include: detecting, from the schedule data in the past, the held meeting having a same attribute as the attribute set in the scheduled meeting; and determining, as the zone where the scheduled meeting is held, the zone where the detected held meeting was held.

Consequently, it is possible to detect, from the schedule data in the past, a held meeting having the same attribute as the attribute set in the scheduled meeting and determine, as the zone where the scheduled meeting is held, a zone where the detected held meeting was held. Therefore, by controlling the air conditioner based on the operation result data of the air conditioner associated with the zone where the meeting was held, it is possible to suppress deterioration in comfort in the zone where the scheduled meeting is held.

In a sixth invention, priority may be set in the attribute data, and, when a first meeting and a second meeting scheduled to be held on a date and time overlapping a date and time when the first meeting is held are set in a same zone and the first meeting and the second meeting cannot be simultaneously held in the zone, a meeting set based on the attribute data having high priority may be determined as a meeting held in the set zone.

Consequently, when the first meeting and the second meeting scheduled to be held on the date and time overlapping the date and time when the first meeting is held are set in the same zone, it is possible to preferentially select, as the meeting held in the zone, a meeting selected in an attribute with high priority.

In a seventh invention, the step of determining the operation state of the air conditioner may include setting the operation state of the air conditioner to a same operation state as the operation state of the air conditioner associated with the zone where the detected held meeting was held.

Consequently, by setting the operation state of the air conditioner to the same operation state as the operation state of the air conditioner associated with the zone where the held meeting was held, it is possible to suppress deterioration in comfort in the zone where the scheduled meeting is held.

An eighth invention is an operation control device that generates an operation plan for a plurality of air conditioners respectively associated with a plurality of zones in a room, the operation control device including: an acquiring unit configured to acquire operation result data indicating operation results of the plurality of air conditioners and schedule data in which a schedule of a meeting is registered and a number of participants in the meeting; a zone determining unit configured to determine, based on the schedule data and the operation result data, a zone where the scheduled meeting registered in the schedule data is held; an operation-state determining unit configured to determine, based on a number of participants in the meeting held in the determined zone, whether an operation state of the air conditioner associated with the determined zone is set to an energy saving operation state in which power consumption of the air conditioner is reduced or a normal operation state in which the power consumption is not reduced; a generating unit configured to generate parameters for controlling the air conditioner, the parameters corresponding to the determined operation state; and a transmitting unit configured to transmit the generated parameters to the air conditioner associated with the determined zone.

Consequently, the zone where the scheduled meeting is held is determined based on the schedule data and the operation result data. The parameters for controlling the air conditioner associated with the determined zone are generated and transmitted to the associated air conditioner. Therefore, it is possible to suitably control the operation state of the air conditioner corresponding to the zone where the scheduled meeting is held and suppress deterioration in comfort in the zone where the scheduled meeting is held.

A ninth invention is an operation planning system comprising: a plurality of air conditioners respectively associated with a plurality of zones in a room; and an operation control device that generates an operation plan for the plurality of air conditioners, the operation control device including: an acquiring unit configured to acquire operation result data indicating operation results of the plurality of air conditioners and schedule data in which a schedule of a meeting is registered and a number of participants in the meeting; a zone determining unit configured to determine, based on the schedule data and the operation result data, a zone where the scheduled meeting registered in the schedule data is held; an operation-state determining unit configured to determine, based on a number of participants in the meeting held in the determined zone, whether an operation state of the air conditioner associated with the determined zone is set to an energy saving operation state in which power consumption of the air conditioner is reduced or a normal operation state in which the power consumption is not reduced; a generating unit configured to generate parameters for controlling the air conditioner, the parameters corresponding to the determined operation state; and a transmitting unit configured to transmit the generated parameters to the air conditioner associated with the determined zone.

Consequently, the zone where the scheduled meeting is held is determined based on the schedule data and the operation result data. The parameters for controlling the air conditioner associated with the determined zone are generated and transmitted to the associated air conditioner. Therefore, it is possible to suitably control the operation state of the air conditioner corresponding to the zone where the scheduled meeting is held and suppress deterioration in comfort in the zone where the scheduled meeting is held.

An embodiment of the present invention is explained below with reference to the accompanying drawings.

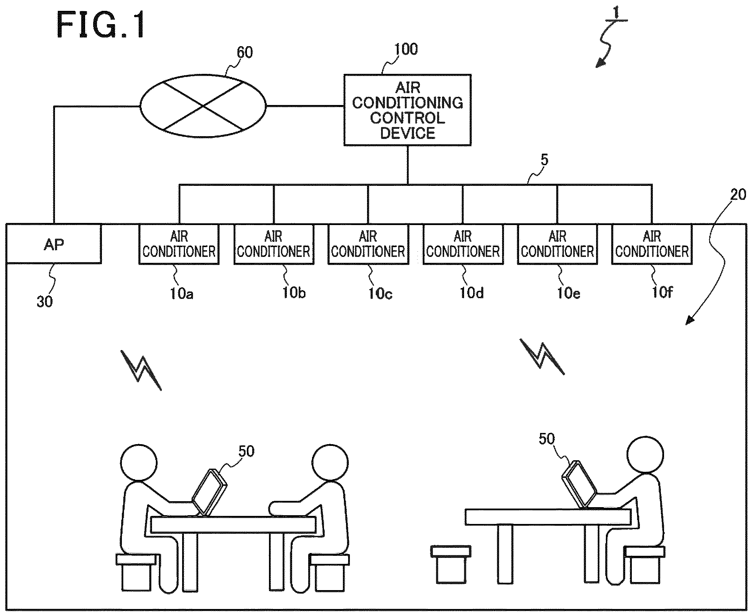

FIG. 1 is a system configuration diagram of an operation planning system 1 applied with the present invention.

The operation planning system 1 is, for example, a system that centrally manages air conditioning of a building such as an office building and includes a plurality of air conditioners 10 and an air conditioning control device 100 that controls the plurality of air conditioners 10. The air conditioning control device 100 corresponds to an example of the "operation control device" of the present invention. In FIG. 1, six air conditioners 10a, 10b, 10c, 10d, 10e, and 10f are shown as the air conditioners 10. However, the number of the air conditioners 10 controlled by the air conditioning control device 100 is optional. In the following explanation, when it is unnecessary to distinguish the air conditioners 10a, 10b, 10c, 10d, 10e, and 10f, the air conditioners 10a, 10b, 10c, 10d, 10e, and 10f are described as air conditioners 10.

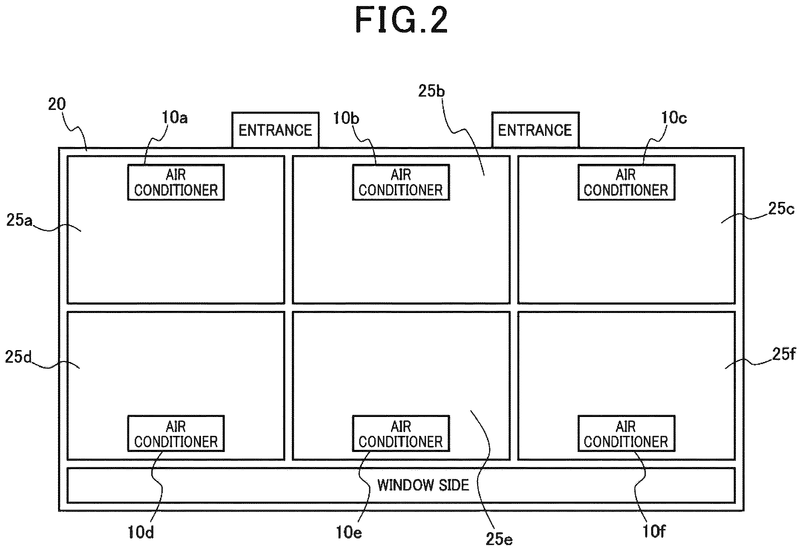

The operation planning system 1 is, for example, a system that sets one floor of the office building as an air conditioning target space 20 and shares and air-conditions, with the plurality of air conditioners 10, a plurality of air conditioning zones 25 (see FIG. 2) formed by dividing the target space 20 without partitions.

The air conditioners 10 may have a configuration including a plurality of indoor units set in the target space 20 and outdoor units set outside a room and configured to supply coolant gas to the indoor units or may include a configuration in which the indoor units and the outdoor units are integrated. The air conditioners 10 are devices including heat exchangers (not shown in FIG. 1) and capable of adjusting the temperature of wind blown out from the air conditioners 10. In other words, the air conditioners 10 include a blowing function and a cooling and heating function. Each of the air conditioners 10 is connected to the air conditioning control device 100 via a cable 5. The air conditioning control device 100 controls the operation of the air conditioners 10 such that the temperature of air conditioning zones 25 reaches a set temperature.

FIG. 2 is a diagram showing a correspondence relation between the air conditioners 10 and the air conditioning zones 25.

In this embodiment, when the target space 20 is viewed from above, the target space 20 is divided into six zones, that is, air conditioning zones 25a, 25b, 25c, 25d, 25e, and 25f. The air conditioners 10a, 10b, 10c, 10d, 10e, and 10f are set one by one with respect to each of the air conditioning zones 25a, 25b, 25c, 25d, 25e, and 25f. In the present invention, it goes without saying that the number of the air conditioning zones 25 is not limited to six. The number of the air conditioning zones 25 and the number of the air conditioners 10 do not have to be the same. For example, one air conditioning zone 25 may be shared and air-conditioned by the plurality of air conditioners 10. A plurality of air conditioning zones 25 may be air-conditioned by one air conditioner 10. In the explanation in this embodiment, it is assumed that sizes of the air conditioning zones 25a, 25b, 25c, 25d, 25e, and 25f are the same. However, the sizes of the air conditioning zones 25 may be changed according to the abilities of the air conditioners 10.

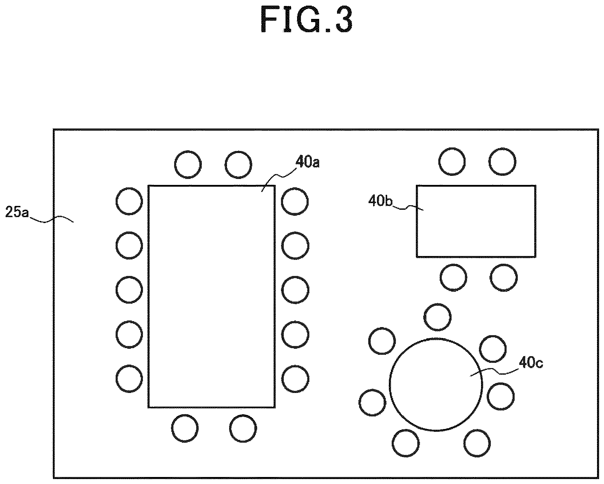

FIG. 3 is a diagram showing an example of disposition of tables 40 in the air conditioning zone 25a.

Tables 40 used in a meeting are disposed in the air conditioning zones 25. In FIG. 3, an example in which three tables 40, that is, tables 40a, 40b, and 40c are disposed is shown. The table 40a is a table having seats for fourteen persons. The table 40b is a table having seats for four persons. The table 40c is a table having seats for seven persons. In other words, the three tables 40a, 40b, and 40c, which are meeting places, and chairs are prepared. Maximum three meetings can be simultaneously held. Note that, in FIG. 3, illustration of white boards or the like on which memorandums or the like of the meetings are written is omitted.

As in the air conditioning zone 25a, the tables 40 and chairs are set in the air conditioning zones 25b, 25c, 25d, 25e, and 25f. The numbers of the tables 40 set in the air conditioning zones 25b, 25c, 25d, 25e, and 25f and the numbers of seats of the tables 40 are optional.

Participants in a meeting carry terminal devices 50. As the terminal devices 50, for example, a cellular phone, a smartphone, a PDA (Personal Digital Assistant), a tablet terminal, a personal computer, or a dedicated remote control terminal is used. Not all the participants in the meeting need to carry the terminal devices 50. For example, only an organizer of the meeting may carry the terminal device 50.

The participants operate the terminal devices 50 to input reservation information. The reservation information includes, for example, an organizer ID for identifying the organizer of the meeting, a holding scheduled date and time of the meeting, participant IDs for identifying participants scheduled to participate in the meeting, and attribute data. The attribute data includes, for example, secrecy information indicating whether the meeting is secretly held, meeting type information indicating a type of the meeting, and job title/post type information specifying job titles and posts of participants in the meeting. The meeting type information includes, for example, a liaison meeting, a decision making meeting, a presentation, and a lecture. One of the participants in the meeting, for example, the organizer only has to input the reservation information. The terminal device 50 transmits the received reservation information to the air conditioning control device 100 via a communication network 60.

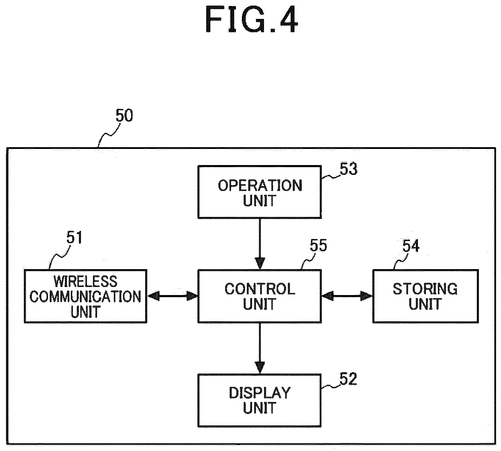

FIG. 4 is a block diagram showing the configuration of the terminal device 50.

The configuration of the terminal device 50 is explained with reference to FIG. 4. The terminal device 50 includes a wireless communication unit 51, a display unit 52, an operation unit 53, a storing unit 54, and a control unit 55.

The wireless communication unit 51 executes wireless communication of a wireless LAN (Local Area Network) or the like via an access point 30 provided in a building in which the operation planning system 1 is constructed. The wireless communication unit 51 can also be configured to execute wireless communication by standards such as Wi-Fi (registered trademark), WiMAX (registered trademark), 3G mobile communication, 4G mobile communication, and Bluetooth (registered trademark).

The display unit 52 includes a display (not shown in FIG. 4) such as a liquid crystal panel or organic EL and causes the display to display images such as a moving image, a still image, characters, and figures according to the control by the control unit 55.

The operation unit 53 includes hardware keys such as buttons and switches and outputs an operation signal corresponding to received operation to the control unit 55. A touch panel may be provided in the display unit 52. The operation unit 53 may be configured to detect touch operation on the touch panel.

The storing unit 54 includes a volatile storage device such as a RAM and a nonvolatile storage device such as a ROM or a flash memory. The storing unit 54 stores control programs such as an OS (Operating System) and application programs. The application programs include, for example, a reservation application for making a reservation of a meeting.

The control unit 55 includes a processor (not shown in FIG. 4) configured by a CPU (Central Processing Unit) or a microcomputer. The processor executes the control programs stored in the storing unit 54 to control the units of the terminal device 50. The processor may be configured by a single processor or can also be configured by a plurality of processors.

When the operation unit 53 receives operation for selecting the reservation application, the control unit 55 executes the selected reservation application. When the control unit 55 executes the reservation application, a reservation screen for a meeting is displayed on the display unit 52. Illustration of the reservation screen is omitted. For example, an organizer of the meeting inputs the reservation information with the operation unit 53 while viewing the reservation screen displayed on the display unit 52. When the reservation information is input, the control unit 55 controls the wireless communication unit 51 and transmits the receive reservation information to the air conditioning control device 100.

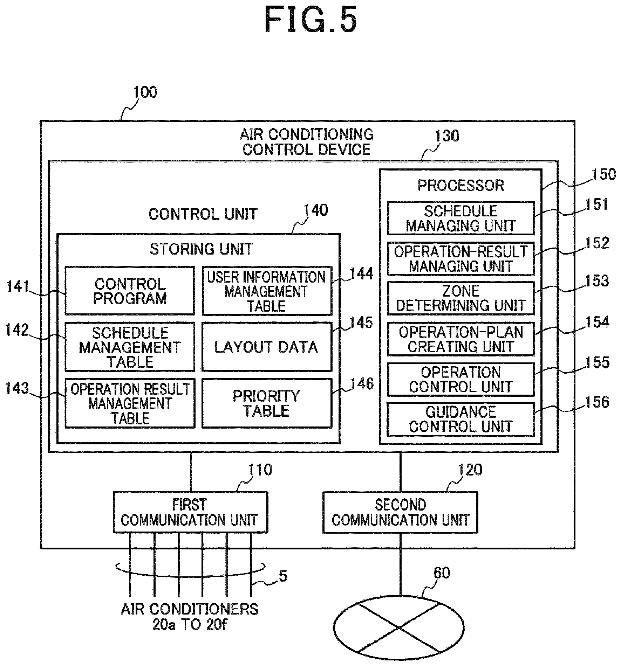

FIG. 5 is a block diagram showing the configuration of the air conditioning control device 100.

The configuration of the air conditioning control device 100 is explained with reference to FIG. 5.

The air conditioning control device 100 includes a first communication unit 110, a second communication unit 120, and a control unit 130.

The first communication unit 110 includes a connector to which the cable 5 is connected and an interface circuit that processes a signal received or transmitted via the cable 5. Illustration of the connector and the interface circuit is omitted. The first communication unit 110 transmits, according to the control by the control unit 130, parameters generated by the control unit 130 to the air conditioners 10. The parameters are explained below.

The second communication unit 120 is connected to the communication network 60 such as a LAN. The access point 30 is connected to the communication network 60. The second communication unit 120 receives, via the communication network 60, the reservation information transmitted from the terminal device 50.

The control unit 130 includes a storing unit 140 and a processor 150.

The storing unit 140 includes a nonvolatile storage device such as a flash memory, an EEPROM (Electronically Erasable and Programmable Read Only Memory), or an SSD (Solid State Drive). The storing unit 140 includes a volatile storage device such as a RAM used as a work area of the processor 150. The storing unit 140 can also be configured by a hard disk drive. In this case, the storing unit 140 can also be provided on the outside of the control unit 130.

The storing unit 140 stores a control program 141, a schedule management table 142, an operation result management table 143, a user information management table 144, layout data 145, and a priority table 146.

The control program 141 is a program such as an OS or firmware executed by the processor 150.

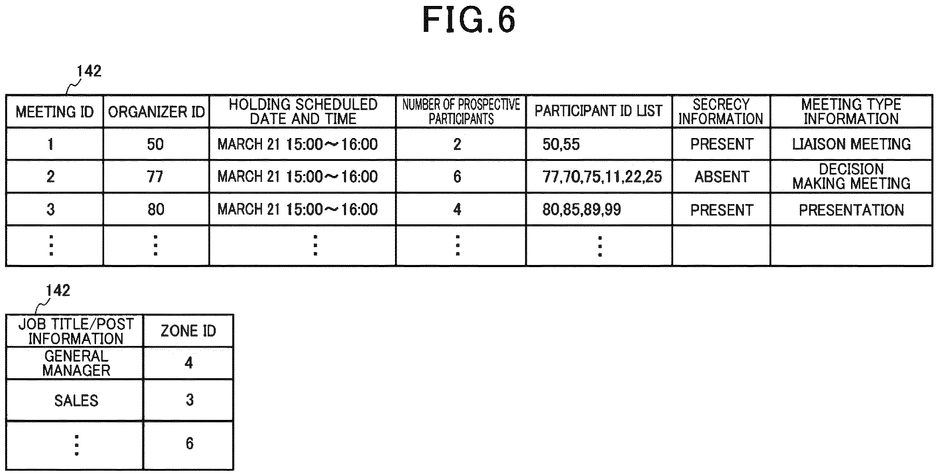

FIG. 6 is a diagram showing an example of the schedule management table 142.

The reservation information received from the terminal device 50 is registered in the schedule management table 142. In the schedule management table 142, an organizer ID, a holding scheduled date and time, the number of prospective participants, and a participant ID list in association with a meeting ID for identifying the meeting. In the schedule management table 142, secrecy information, meeting type information, and job title/post type information are registered as attribute information in association with the meeting ID. In the schedule management table 142, a zone ID of the air conditioning zone 25 is registered in association with the meeting ID. The zone ID is a zone ID of the air conditioning zone 25 where the meeting having the meeting ID is held. The zone ID is determined by the control unit 130 before the meeting is held. In the following explanation, data registered in the schedule management table 142 is referred to as "schedule data".

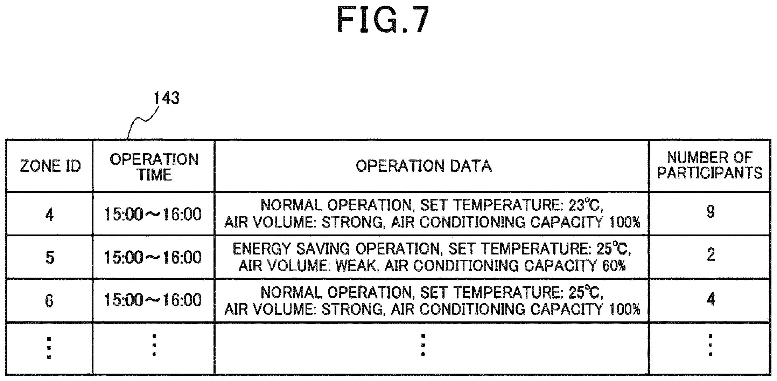

FIG. 7 is a diagram showing an example of the operation result management table 143.

In the operation result management table 143, an operation time of the air conditioner 10, operation data indicating an operation result of the air conditioner 10, and the number of participants in the meeting are registered in association with a zone ID, which is identification information of the air conditioning zone 25. The operation time, the operation data, and the number of participants registered in the operation result management table 143 are collectively referred to as operation result data.

The operation time and the operation data of the air conditioner 10 is data acquired from the respective air conditioners 10. The operation date includes information such as an operation state, a set temperature, an air volume, and an air conditioning capacity of the air conditioner 10. The operation state of the air conditioner 10 includes an energy saving operation state and a normal operation state. The energy saving operation state is an operation mode in which power consumption of the air conditioner 10 is reduced. The normal operation state is an operation mode in which the power consumption of the air conditioner 10 is not reduced.

The air conditioning capacity is a value indicating a load factor of an inverter (not shown in the figures) included in the air conditioner 10. When the load factor of the inverter is 100%, the air conditioning capacity is 100%. When the load factor of the inverter is 60%, the air conditioning capacity is 60%. In this embodiment, a state in which the air conditioning capacity is 100% is referred to as normal operation state and a state in which the air conditioning capacity is 60% or less is referred to as energy saving operation state. However, a relation between the air conditioning capacities in the normal operation state and the energy saving operation state and the operation state of the air conditioner 10 can be optionally changed.

When the air conditioning control device 100 manages, as histories, operation times of the respective air conditioners 10 and air conditioning control parameters set in the air conditioners 10, the air conditioning control device 100 may calculate operation result data based on the history of the air conditioning control parameters.

The number of participants registered in the operation result management table 143 is data set by the control unit 130 referring to schedule data of meetings held in the past.

As shown in FIG. 6, in the schedule management table 142, the holding scheduled date and time of the meeting, the number of prospective participants, and the zone ID are registered in association with the meeting ID. After the meeting ends, the control unit 130 refers to the holding scheduled date and time of the meeting, the number of prospective participants, and the zone ID of the schedule management table 142, aggregates the number of participants in the meeting for each of the air conditioning zones, and registers the aggregated number of persons in the operation result management table 143 as the number of participants.

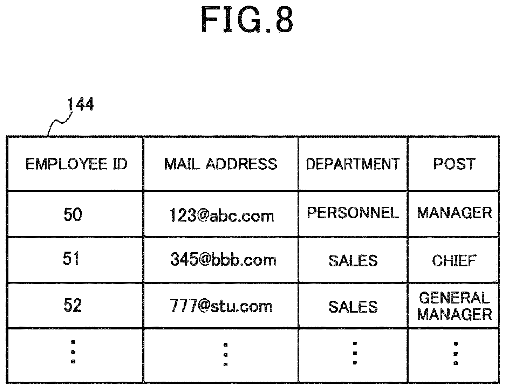

FIG. 8 is a diagram showing an example of the user information management table 144.

In the user information management table 144, a mail address, a department, and a post of an employee are registered in association with an employee ID for identifying the employee. The employee ID is an ID common to the organizer ID and the participant ID registered in the schedule management table 142 shown in FIG. 6. In other words, an ID for uniquely specifying an employee of a company is the employee ID, the organizer ID, and the participant ID.

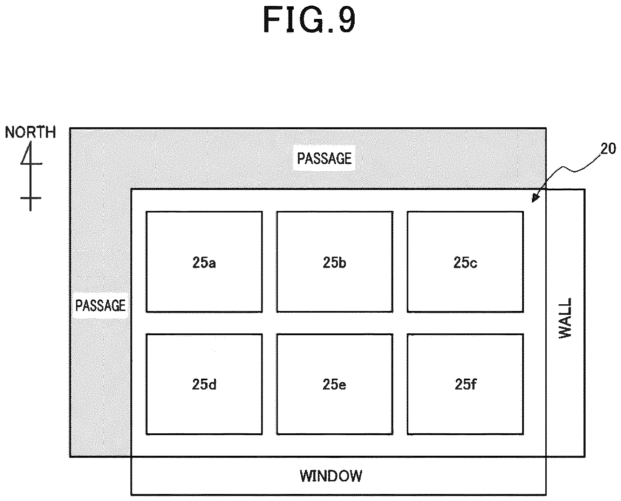

FIG. 9 is a diagram showing an example of a layout of the target space 20.

The layout data 145 includes data indicating the positions of the air conditioning zones 25 in the target space 20. For example, when the target space 20 has the layout shown in FIG. 9, the layout data 145 includes information indicating that the target space 20 is divided into six air conditioning zones 25, that is, the air conditioning zones 25a, 25b, 25c, 25d, 25e, and 25f.

The layout data 145 includes information indicating that the air conditioning zones 25a, 25b, and 25c are disposed on the north side of the target space 20 and the air conditioning zones 25d, 25e, and 25f are disposed on the south side of the target space 20.

The layout data 145 includes information indicating that the air conditioning zones 25a and 25d are disposed on the west side of the target space 20 and the air conditioning zones 25c and 25f are disposed on the east side of the target space 20.

The layout data 145 includes information indicating that the air conditioning zone 25b is disposed between the air conditioning zone 25a and the air conditioning zone 25c and the air conditioning zone 25e is disposed between the air conditioning zone 25d and the air conditioning zone 25f.

Further, the layout data 145 includes information indicating that the north side of the air conditioning zones 25a, 25b, and 25c is a passage and the west side of the air conditioning zones 25a and 25d is also a passage.

The layout data 145 includes the numbers of meeting places included in the respective air conditioning zones 25 and the number of seats in each of the meeting places. For example, in the case of the disposition of the tables 40 in the air conditioning zone 25a shown in FIG. 3, "3" is set as the number of meeting places. As the number of seats in each of the meeting places, the meeting place: the table 40a, the number of seats "14", the meeting place: the table 40b, the number of seats "4", and the meeting place: the table 40c, the number of seats "7" are set.

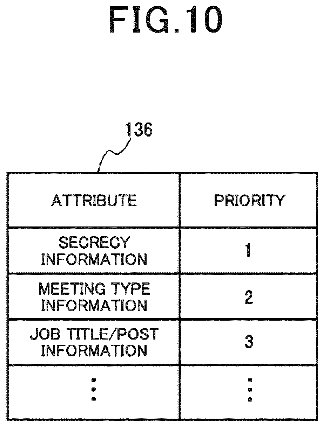

FIG. 10 is a diagram showing an example of the priority table 146.

The priority table 146 is a table in which priority of the secrecy information, the meeting type information, and the job title/post type information, which are the attribute data, is set. For example, a system administrator of the operation planning system 1 can change the priority.

Referring back to FIG. 5, the configuration of the air conditioning control device 100 is continuously explained.

The processor 150 is an arithmetic processing device configured by a CPU, a microcomputer, or the like. The processor 150 may be configured by a single processor or may be configured by a plurality of processors. The processor 150 may be configured by an SoC integrated with a part or the entire storing unit 140 and other circuits. The processor 150 may be configured by a combination of a CPU that executes programs and a DSP that executes predetermined arithmetic processing. All the functions of the processor 150 may be implemented in hardware or may be configured using a programmable device.

In the control unit 130, the processor 150 executes a command set described in the control program 141 to perform an arithmetic operation and control of data. Consequently, the control unit 130 functions as a schedule managing unit 151, an operation-result managing unit 152, a zone determining unit 153, an operation-plan creating unit 154, an operation control unit 155, and a guidance control unit 156.

The schedule managing unit 151 registers reservation information received from the terminal device 50 in the schedule management table 142. When receiving the reservation information from the terminal device 50, the schedule managing unit 151 generates a meeting ID for identifying a meeting. The schedule managing unit 151 registers the generated meeting ID in the schedule management table 142 in association with information included in the received reservation information.

The operation-result managing unit 152 acquires operation data from each of the plurality of air conditioners 10. Timing when the operation-result managing unit 152 acquires the operation data from the air conditioner 10 is optional. For example, timing when all meetings scheduled for one day end can be taken as a preferred example.

When acquiring the operation data, the operation-result managing unit 152 registers the acquired operation data in the operation result management table 143 in association with a zone ID of an air conditioning zone where the air conditioner 10, from which the operation data is acquired, performs air conditioning.

The zone determining unit 153 refers to the schedule management table 142 and the operation result management table 143 and determines the air conditioning zones 25 where respective meetings registered in the schedule management table 142 are held. The zone determining unit 153 corresponds to an example of the "acquiring unit" and the "zone determining unit" of the present invention.

First, the zone determining unit 153 acquires, from the schedule management table 142, the number of prospective participants in a meeting for which the air conditioning zone 25 is determined (hereinafter referred to as target meeting).

Subsequently, the zone determining unit 153 refers to the operation result management table 143 and detects operation result data in which the number of participants coincides with the number of prospective participants in the target meeting. When the number of prospective participants in one meeting does not coincide with the number of participants of the operation result data, the zone determining unit 153 collects, as one target meeting, a plurality of meetings, holding scheduled date and times of which overlap, and detects operation result data in which a total of the numbers of prospective participants in the plurality of meetings coincides with the number of participants. In the following explanation, the plurality of meetings, the holding scheduled date and times of which overlap, collected as one target meeting is referred to as "set of meetings" as well.

Further, when the difference between the prospective participants in the target meeting and the number of participants is within a preset range, the zone determining unit 153 may detect operation result data corresponding to the number of participants as operation result data associated with the target meeting.

When a plurality of operation result data in which the number of participants coincides with the prospective participants in the target meeting are detected, the zone determining unit 153 refers to schedule data in the past based on zone IDs and operation times of the detected operation result data. The zone determining unit 153 detects meetings, zone IDs of which coincide with the zone IDs of the operation result data and operation times of which overlap holding scheduled data and times of meeting of the schedule management table 142 in the past. The detected meetings are held meetings. When detecting the meetings, the zone determining unit 153 compares attribute data of the detected meetings and attribute data of the target meeting. The zone determining unit 153 determines, for example, whether coinciding items are present in the attribute data of the detected meetings and the attribute data of the target meeting.

In this embodiment, in the attribute data, the priority is set higher in the order of the secrecy information, the meeting type information, and the job title/post type information. When a plurality of meetings coinciding with the attribute data of the target meeting are detected in the detected meetings, the zone determining unit 153 selects meetings coinciding in items having high priority. For example, it is assumed that a meeting A and a meeting B are detected as the held meetings and the meeting A and the target meeting coincide in the "secrecy information" and the meeting B and the target meeting coincide in the "job title/post type information". In this case, the zone determining unit 153 determines, as the air conditioning zone 25 where the target meeting is held, an air conditioning zone having a zone ID associated with operation result data in which the meeting A is detected.

When all meetings for one day registered in the schedule management table 142 are allocated to any one of the air conditioning zones 25, the zone determining unit 153 determines whether target meetings, holding scheduled date and times of which overlap, are redundantly allocated to the same air conditioning zone 25.

For example, it is assumed that the meeting A and the meeting B as one target meeting and the meeting C and the meeting D as one target meeting are allocated to the air conditioning zone 25a, which is the same air conditioning zone 25, in the same period of time. In this case, the zone determining unit 153 selects one of the target meetings based on attribute data of the meeting A and the meeting B and attribute data of the meeting C and the meeting D. The meeting A and the meeting B correspond to an example of the "first meeting" of the present invention. The meeting C and the meeting D correspond to an example of the "second meeting" of the present invention.

As explained above, it is assumed that the priority is set in the order of the secrecy information, the meeting type information, and the job title/post type information. Priority is also set for each of the attribute data. In the secrecy information, for example, it is assumed that the priority of the secrecy information "secrecy is present" is set higher than the priority of the secrecy information "secrecy is absent". In the meeting type information, for example, it is assumed that the priority is set in the order of the decision making meeting, the presentation, and the liaison meeting. In the job title of the job title/post type information, for example, it is assumed that the priority is set higher in the order of a research post, a sales post, and an office work post. In the post type information, it is assumed that the priority is set in the descending order of posts.

First, the zone determining unit 153 refers to secrecy information of the meeting A and the meeting B and secrecy information of the meeting C and the meeting D. For example, when one of the meeting A and the meeting B is "secrecy is present" and the meeting C and the meeting D are "secrecy is absent", the zone determining unit 153 allocates the meeting A and the meeting B to the air conditioning zone 25a.

When the secrecy information of the meeting A and the meeting B and the secrecy information of the meeting C and the meeting D are common, the zone determining unit 153 determines, based on the meeting type information, a meeting allocated to the air conditioning zone 25a.

For example, the zone determining unit 153 selects meeting type information having higher priority of meeting type information of the meeting A and meeting type information of the meeting B. Similarly, the zone determining unit 153 selects meeting type information having higher priority of meeting type information of the meeting C and meeting type information of the meeting D.

The zone determining unit 153 compares the selected meeting type information and selects the meeting type information having the higher priority. When the priority of the meeting type information of the meeting A and the meeting B is higher, the zone determining unit 153 allocates the meeting A and the meeting B to the air conditioning zone 25a. When the priority of the meeting type information of the meeting C and the meeting D is higher, the zone determining unit 153 allocates the meeting C and the meeting D to the air conditioning zone 25a.

When the priority of the meeting type information of the meeting A and the meeting B and the priority of the meeting type information of the meeting C and the meeting D are the same, the zone determining unit 153 determines, based on the job title/post type information, meetings allocated to the air conditioning zone 25a.

For example, the zone determining unit 153 selects job title/post type information having higher priority of job title/post type information of the meeting A and job title/post type information of the meeting B. Similarly, the zone determining unit 153 selects job title/post type information having higher priority of job title/post type information of the meeting C and job title/post type information of the meeting D.

The zone determining unit 153 compares the selected job title/post type information and selects the job title/post type information having the higher priority. When the priority of the job title/post type information of the meeting A and the meeting B is higher, the zone determining unit 153 allocates the meeting A and the meeting B to the air conditioning zone 25a. When the priority of the job title/post type information of the meeting C and the meeting D is higher, the zone determining unit 153 allocates the meeting C and the meeting D to the air conditioning zone 25a.

When determining the air conditioning zones 25, the zone determining unit 153 may determine the air conditioning zones 25 based on the layout data 145 of the target space 20 and the meeting type information.

For example, when the meeting type information is the "lecture" and a large number of people are scheduled to participate in meetings, the zone determining unit 153 may refer to the layout data 145 and select the air conditioning zones 25 on a window side apart from the passage. For example, in the case of the layout of the air conditioning zones 25 shown in FIG. 9, the air conditioning zones 25d, 25e, and 25f are selected as the air conditioning zones 25.

When a plurality of meetings, scheduled data and times for which overlap, are absent, the zone determining unit 153 may determine the air conditioning zones 25 based on the numbers of seats of the tables 40 disposed in the air conditioning zones 25. For example, the zone determining unit 153 may refer to the layout data 145 and selects, as the air conditioning zone 25 where the target meeting is held, the air conditioning zone 25 including the tables 40, the number of seats of which is the same as the number of prospective participants. The zone determining unit 153 may refer to the layout data 145 and select, as the air conditioning zone 25 where the target meeting is held, the air conditioning zone 25 including the tables 40, the number of seats of which is larger than the number of prospective participants and the difference between the number of seats of which and the number of prospective participants is the smallest.

The zone determining unit 153 may determine the air conditioning zones 25 based on the secrecy information. For example, it is assumed that the holding scheduled date and times of the meeting A and the meeting B overlap and the secrecy information of one of the meeting A and the meeting B is set to "secrecy is present". When there are no other meetings, scheduled date and times of which overlap, and the air conditioning zones 25 to which meetings are not allocated are present, the zone determining unit 153 may determine the air conditioning zones 25 such that the distance between the meeting A and the meeting B is as large as possible. For example, the zone determining unit 153 allocates the meeting A to the air conditioning zone 25a shown in FIG. 9 and allocates the meeting B to the air conditioning zone 25f shown in FIG. 9.

When a plurality of meetings, holding scheduled date and times of which overlap, are present and secrecy information of all the meetings is set to "secrecy is absent", the zone determining unit 153 may allocate the plurality of meetings to the air conditioning zones 25 such that the number of the air conditioning zones 25 to which the meetings are allocated is as small as possible. In this case, it is possible to reduce the number of the air conditioners 10 to be operated and reduce power consumption.

The operation-plan creating unit 154 determines air conditioning control parameters for controlling the respective air conditioners 10. The operation-plan creating unit 154 corresponds to an example of the "operation-state determining unit" and the "generating unit" of the present invention. The air conditioning control parameters include information such as an operation state, a set temperature, an air volume, and an air conditioning capacity.

The operation-plan creating unit 154 determines operation states of the air conditions 10 based on the operation result data referred to in determining the air conditioning zones 25.

For example, when the number of prospective participants "9" is allocated to the air conditioning zone 25d, the zone ID of which is "4", the operation-plan creating unit 154 sets the air conditioner 10d associated with the zone ID "4" to the air conditioning capacity of 100% and sets the operation state to the normal operation state as shown in FIG. 7. The operation-plan creating unit 154 may also determine the setting temperature and the air volume based on the operation result data.

When the number of prospective participant "2" is allocated to the air conditioning zone 25e, the zone ID of which is "5", the operation-plan creating unit 154 sets the air conditioner 10 to the air conditioning capacity of 60% and sets the operation state to the energy saving operation state as shown in FIG. 7.

When the number of prospective participants "7" is allocated to the air conditioning zone 25f, the zone ID of which is "6", the operation-plan creating unit 154 sets the air conditioner 10d to the air conditioning capacity of 100% and sets the operation state to the normal operation state as shown in FIG. 7.

The operation-plan creating unit 154 may calculate a total of the numbers of prospective participants in meetings allocated to the same air conditioning zone 25, compare the calculated total and a preset threshold, and determine an operation state of the air conditioner 10 associated with the air conditioning zone 25.

When the calculated total of the numbers of prospective participants in the meetings is smaller than the threshold, the operation-plan creating unit 154 sets the operation state of the air conditioner 10 to the energy saving operation state. When the total of the numbers of prospective participants in the meetings is equal to or larger than the threshold, the operation-plan creating unit 154 sets the operation state of the air conditioner 10 to the normal operation state.

At a meeting start time or a predetermined time before the start time, the operation control unit 155 transmits the air conditioning control parameters determined by the operation-plan creating unit 154 to the corresponding air conditioner 10 and operates the air conditioner 10. The operation control unit 155 and the first communication unit 110 correspond to an example of the "transmitting unit" of the present invention.

The guidance control unit 156 acquires, for example, on the previous day of a meeting holding scheduled date, from the schedule management table 142, a participant ID list associated with the meeting. The guidance control unit 156 acquires, from the user information management table 144, mail addresses of participants registered in the acquired participant ID list. Further, the guidance control unit 156 acquires, from the schedule management table 142, a zone ID associated with the meeting and creates a mail for informing, as a meeting place, the air conditioning zone 25 indicated by the acquired zone ID. The guidance control unit 156 transmits the created mail to the acquired mail address. Note that the guidance control unit 156 may refer to the layout data 145 and the number of prospective participants of the schedule management table 142, specify the table 40 where the meeting can be held, and create a mail for informing the position of the specified table 40 as a meeting place.

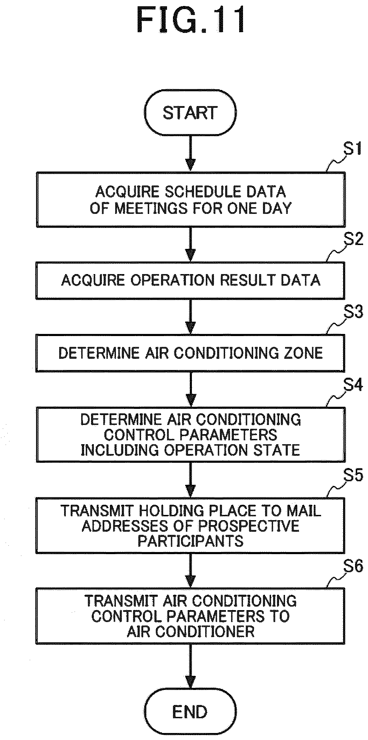

FIG. 11 is a flowchart showing the operation of the air conditioning control device 100.

The operation of the air conditioning control device 100 is explained with reference to the flowchart of FIG. 11.

First, the control unit 130 acquires schedule data of meetings for one day registered in the schedule management table 142 (step S1).

Subsequently, the control unit 130 acquires the operation result data registered in the operation result management table 143 (step S2). Subsequently, the control unit 130 determines the air conditioning zones 25 based on the schedule data for one day acquired in step S1 and the operation result data acquired in step S2 (step S3).

As explained above, the control unit 130 allocates the meetings for one day included in the schedule data to any one of the air conditioning zones 25a to 25f. The control unit 130 detects operation result data in which the number of prospective participants in the target meeting coincides with the number of participants or operation result data in which the difference between the number of prospective participants in the target meeting and the number of participants is within a preset range. The control unit 130 determines, based on the detected operation result data, the air conditioning zone 25 to which the target meeting is allocated.

When a plurality of operation result data are detected, the control unit 130 detects, based on operation times and zone IDs of the operation result data, for each of the operation result data, meetings held in the operation times. The control unit 130 selects, in an attribute with high priority, operation result data of a meeting coinciding with an attribute of the target meeting among the meetings detected for each of the operation result data. The control unit 130 determines, based on the selected operation result data, the air conditioning zone 25 to which the target meeting is allocated.

Subsequently, the control unit 130 determines whether a plurality of meetings or a set of meetings, holding scheduled date and times of which overlap, are allocated to the same air conditioning zone 25. When meetings or a set of meetings, holding scheduled date and times of which overlap, are not allocated to the same air conditioning zone 25, the control unit 130 ends the allocation of the air conditioning zones 25.

When meetings or a set of meetings, holding scheduled date and times of which overlap, are allocated to the same air conditioning zone 25, the control unit 130 allocates, based on attribute data of the meetings or the set of meetings allocated to the same air conditioning zone 25, any one of the meetings or the set of meetings to the air conditioning zone 25.

The control unit 130 reallocates the meetings or the set of meetings excluded from the allocation to the air conditioning zones 25 to the air conditioning zones 25 to which meetings are not allocated at the holding scheduled date and times of the meetings.

Subsequently, the control unit 130 determines air conditioning control parameters including operation states of the air conditioners 10 (step S4). For example, the control unit 130 determines operation states and air conditioning control parameters of the air conditioners 10 based on the operation result data referred to in determining the air conditioning zones 25. The control unit 130 may calculate a total of the numbers of prospective participants in meetings allocated to the same air conditioning zone 25, compare the calculated total and a preset threshold, and determine operation states of the air conditioners 10 associated with the air conditioning zones 25.

Subsequently, the control unit 130 acquires mail addresses of prospective participants in a meeting and transmits a mail for informing a holding place of the meeting to the acquired mail addresses (step S5).

Subsequently, at a holding scheduled date and time of the meeting or a preset time before the holding scheduled date and time of the meeting, the control unit 130 transmits the determined air conditioning control parameters to the corresponding air conditioner 10 (step S6).

As explained above, in this embodiment, the plurality of air conditioners 10 and the plurality of air conditioning zones 25 in the room are associated. The air conditioning control device 100 generates the operation plan for the plurality of air conditioners 10 for each of the plurality of air conditioning zones 25.

The air conditioning control device 100 acquires the operation result data indicating the operation results of the plurality of air conditioners 10 and acquires the schedule data in which a schedule of a meeting is registered. The air conditioning control device 100 determines, based on the acquired schedule data and the operation result data, the air conditioning zone 25 where the scheduled meeting registered in the schedule data is held.

The air conditioning control device 100 determines, based on the number of participants in the meeting held in the determined air conditioning zone 25, whether the operation state of the air conditioner 10 associated with the determined air conditioning zone 25 is set to the energy saving operation state in which the power consumption of the air conditioner 10 is reduced or the normal operation state in which the power consumption is not reduced. Further, the air conditioning control device 100 generates parameters for controlling the air conditioner 10, the parameters corresponding to the determined operation state, and transmits the generated parameters to the air conditioner 10 associated with the determined air conditioning zone 25.

Consequently, the air conditioning zone 25 where the scheduled meeting is held is determined based on the schedule data and the operation result data. The parameters for controlling the air conditioner 10 associated with the determined air conditioning zone 25 is generated and transmitted to the associated air conditioner 10. Therefore, it is possible to suitably control the operation state of the air conditioner 10 corresponding to the air conditioning zone 25 where the scheduled meeting is held and suppress deterioration in comfort in the air conditioning zone 25 where the scheduled meeting is held.

When the air conditioning zone 25 where the meeting is held is determined, the numbers of participants in meetings held in the past are acquired from the schedule data in past, a held meeting, the number of participants in which is same as the number of prospective participants in the scheduled meeting or the difference between the number of participants in which and the number of prospective participants is within a preset range, is detected, and the air conditioning zone 25 where the detected held meeting was held is determined as the air conditioning zone 25 where the meeting is held.

Consequently, the air conditioning zone 25 where the meeting held in the past, the number of participants in which is the same as the number of prospective participants in the scheduled meeting or the difference between the number of participants in which and the number of prospective participants is within the preset range, was held can be determined as the air conditioning zone 25 where the meeting is held. Therefore, by controlling the air conditioner 10 based on the operation result data of the air conditioner 10 associated with the air conditioning zone 25 where the meeting was held, it is possible to suppress deterioration in comfort in the air conditioning zone 25 where the scheduled meeting is held.

When the operation state of the air conditioner 10 is determined, the operation state of the air conditioner 10 is determined as the energy saving operation state when the number of prospective participants in the scheduled meeting is smaller than a preset threshold and the operation state of the air conditioner 10 is determined as the normal operation state when the number of prospective participants is equal to or larger than the threshold.

Consequently, the operation state of the air conditioner 10 can be determined as the energy saving operation state or the normal operation state based on the number of prospective participants in the scheduled meeting. Therefore, when the number of prospective participants in the scheduled meeting is small, it is possible to reduce the power consumption by setting the air conditioner 10 in the energy saving operation state. When the number of prospective participants in the scheduled meeting is large, by setting the air conditioner 10 in the normal operation state, it is possible to suppress deterioration in comfort in the air conditioning zone 25 where the meeting is held.

A meeting place in the determined air conditioning zone 25 is notified to terminal devices 50 carried by the participants in the meeting.

Consequently, it is possible to notify the meeting place where the meeting is held to prospective participants in the scheduled meeting and quickly start the meeting.

The schedule data includes attribute data indicating an attribute of the meeting. When the air conditioning zone 25 is determined, the held meeting having the same attribute as the attribute set in the scheduled meeting is detected from the schedule data in the past and the air conditioning zone 25 where the detected held meeting was held is determined as the air conditioning zone 25 where the scheduled meeting is held.

Consequently, it is possible to detect, from the schedule data in the past, a held meeting having the same attribute as the attribute set in the scheduled meeting and determine, as the air conditioning zone 25 where the scheduled meeting is held, the air conditioning zone 25 where the detected held meeting was held. Therefore, by controlling the air conditioner 10 based on the operation result data of the air conditioner 10 associated with the air conditioning zone 25 where the meeting was held, it is possible to suppress deterioration in comfort in the air conditioning zone 25 where the scheduled meeting is held.

Priority is set in the attribute data. When a first meeting and a second meeting scheduled to be held on a date and time overlapping a date and time when the first meeting is held are set in the same air conditioning zone 25 and the first meeting and the second meeting cannot be simultaneously held in the air conditioning zone 25, a meeting set based on the attribute data having high priority is determined as a meeting held in the set air conditioning zone 25.

Consequently, when the first meeting and the second meeting scheduled to be held on the date and time overlapping the date and time when the first meeting is held are set in the same air conditioning zone 25, it is possible to preferentially select, as the meeting held in the air conditioning zone 25, a meeting selected in an attribute with high priority.

When the operation state of the air conditioner 10 is determined, the operation state of the air conditioner 10 is set to the same operation state as the operation state of the air conditioner 10 associated with the air conditioning zone 25 where the detected held meeting was held.

Consequently, by setting the operation state of the air conditioner 10 to the same operation state as the operation state of the air conditioner 10 associated with the air conditioning zone 25 where the held meeting was held, it is possible to suppress deterioration in comfort in the air conditioning zone 25 where the scheduled meeting is held.

The embodiment explained above is a preferred embodiment of the present invention. However, the present invention is not limited to this embodiment. Various modified implementations are possible within a range not departing from the gist of the present invention.

For example, in the embodiment, the configuration is explained in which the air conditioning control device 100 includes the schedule managing unit 151, the zone determining unit 153, and the operation-plan creating unit 154. As another configuration, a device including the schedule managing unit 151 and a device including the zone determining unit 153 and the operation-plan creating unit 154 may be configured by separate devices.

In the above explanation in the embodiment, only the system administrator is capable of changing the priority of the secrecy information, the meeting type information, and the job title/post type information, which are the attribute data. However, for example, an organizer of a meeting may be capable of changing the priority.

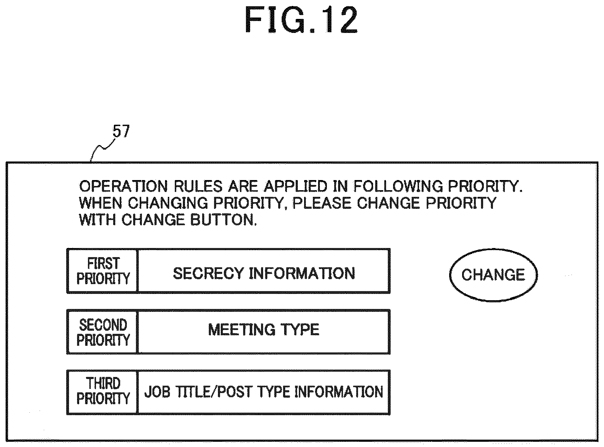

For example, when the scheduled meeting cannot be allocated to any one of the air conditioning zones 25, the control unit 130 may cause the terminal device 50 of the organizer to display a changing screen 57 for the priority shown in FIG. 12. The organizer performs operation for changing the priority of the attribute data while referring to the changing screen 57 for the priority shown in FIG. 12. When the priority of the attribute data is changed, the control unit 130 reallocates the scheduled meeting to any one of the air conditioning zones 25 according to the changed priority.

When a meeting is allocated to the air conditioning zone 25 having a low frequency of use and a small number of operation result data, the operation state of the air conditioner 10 for the air conditioning zone 25 may be set to the energy saving operation state. When the air conditioning zone 25 having a large number of operation result data is present adjacent to the air conditioning zone 25 having a small number of operation result data, the air conditioning control parameters of the air conditioner 10 for the air conditioning zone 25 having the small number of operation result data may be set based on the operation result data of the air conditioner 10 for the air conditioning zone 25 having the large number of operation result data.

When the air conditioning zone 25 where the meeting is held is determined, the air conditioning control device 100 may determine the air conditioning zone 25 considering a holding period of the meeting.

For example, when a holding scheduled month of a meeting is March, April, or May, the air conditioning control device 100 may refer to the layout data 145 and preferentially select the air conditioning zones 25 located on the window side. When the holding scheduled month of the meeting is December, January, or February, the air conditioning control device 100 may refer to the layout data 145 and preferentially select the air conditioning zones 25 locate on the passage side.

The respective functional units of the air conditioning control device 100 shown in FIG. 5 indicate functional components. Specific implementation forms of the functional units are not particularly limited. That is, hardware individually corresponding to the respective functional units does not always need to be implemented. It is naturally possible to adopt a configuration in which one processor executes programs to realize functions of a plurality of functional units. It is also possible to adopt a configuration in which a plurality of processors cooperate to realize functions of one or a plurality of functional units. Further, a part of functions realized by software in the embodiment may be realized by hardware or a part of functions realized by hardware may be realized by software. Besides, specific detailed configurations of the other units configuring the display system 1 can also be optionally changed in a range not departing from the gist of the present invention.

Processing units of the flowchart of FIG. 11 are divided according to main processing contents in order to facilitate understanding of the processing of the air conditioning control device 100. Therefore, the present invention is not limited by a method of dividing the processing units and names shown in the flowchart of FIG. 11. The processing of the control unit 130 can also be divided into a larger number of processing units according to the processing contents or can be divided such that one processing unit includes a larger number of kinds of processing. The processing order of the flowchart is not limited to the example shown in FIG. 11.

When the operation planning method is realized using a computer, programs to be executed by the computer can also be configured in a form of a recording medium or a transmission medium for transmitting the programs. As the recording medium, a magnetic or optical recording medium or a semiconductor memory device can be used. Specifically, examples of the recording medium include portable or stationary recording media such as a flexible disk, an HDD (Hard Disk Drive), a CD-ROM (Compact Disk Read Only Memory), a DVD, a Blu-ray Disc, a magneto-optical disk, a flash memory, and a card-type recording medium. The recording medium may be a nonvolatile storage device such as a RAM (Random Access Memory), a ROM (Read Only Memory), or an HDD included in the air conditioning control device 100. Blu-ray is a registered trademark.

As explained above, the operation planning method according to the present invention can be suitably used in a system that shares and air-conditions, with the plurality of air conditioners 10, the plurality of air conditioning zones 25 formed by dividing the target space 20 without partitions.

### Reference Signs List

- 1: operation planning system
- 5: cable
- 10: air conditioner
- 20: target space
- 25: air conditioning zone
- 30: access point
- 40: table
- 50: terminal device
- 51: wireless communication unit
- 53: operation unit
- 54: storing unit
- 55: control unit
- 57: changing screen
- 60: communication network
- 100: air conditioning control device
- 110: first communication unit
- 120: second communication unit
- 130: control unit
- 140: storing unit
- 141: control program
- 142: schedule management table
- 143: operation result management table
- 144: user information management table
- 145: layout data
- 146: priority table
- 150: processor
- 151: schedule managing unit
- 152: operation-result managing unit
- 153: zone determining unit
- 154: operation-plan creating unit
- 155: operation control unit
- 156: guidance control unit

## Claims

1. An operation planning method for generating an operation plan for a plurality of air conditioners (10) for each of a plurality of zones (25) in a room (20), the plurality of air conditioners (10) and the plurality of zones (25) being associated with each other,
the operation planning method **characterized by** comprising:
a step of acquiring operation result data indicating operation results of the plurality of air conditioners (10);
a step of acquiring schedule data in which a schedule of a meeting is registered and a number of participants in the meeting;
a step of determining, based on the schedule data and the operation result data, a zone (25) where the scheduled meeting registered in the schedule data is held;
a step of determining, based on the number of participants in the meeting held in the determined zone (25), whether an operation state of the air conditioner (10) associated with the determined zone (25) is set to an energy saving operation state in which power consumption of the air conditioner (10) is reduced or a normal operation state in which the power consumption is not reduced;
a step of generating parameters for controlling the air conditioner (10) , the parameters corresponding to the determined operation state; and
a step of transmitting the generated parameters to the air conditioner (10) associated with the determined zone (25).

2. The operation planning method according to claim 1, wherein the step of determining the zone (25) includes:
acquiring, from the schedule data in past, numbers of participants in meetings held in the past;
detecting a held meeting, a number of participants in which is same as a number of prospective participants in the scheduled meeting or a difference between the number of participants in which and the number of prospective participants is within a preset range; and
determining, as the zone (25) where the scheduled meeting is held, a zone (25) where the detected held meeting was held.

3. The operation planning method according to claim 1 or 2, wherein the step of determining the operation state of the air conditioner (10) includes:
determining the operation state of the air conditioner (10) as the energy saving operation state when the number of prospective participants in the scheduled meeting is smaller than a preset threshold; and
determining the operation state of the air conditioner (10) as the normal operation state when the number of prospective participants is equal to or larger than the threshold.

4. The operation planning method according to any one of claims 1 to 3, further comprising a step of notifying a meeting place in the zone (25) determined in the step of determining the zone (25) to terminal devices (50) carried by the participants in the meeting.

5. The operation planning method according to claim 2, wherein
the schedule data includes attribute data indicating an attribute of the meeting, and
the step of determining the zone (25) includes:
detecting, from the schedule data in the past, the held meeting having a same attribute as the attribute set in the scheduled meeting; and
determining, as the zone (25) where the scheduled meeting is held, the zone (25) where the detected held meeting was held.

6. The operation planning method according to claim 5, wherein
priority is set in the attribute data, and
when a first meeting and a second meeting scheduled to be held on a date and time overlapping a date and time when the first meeting is held are set in a same zone (25) and the first meeting and the second meeting cannot be simultaneously held in the zone (25), a meeting set based on the attribute data having high priority is determined as a meeting held in the set zone (25).

7. The operation planning method according to claim 2, wherein the step of determining the operation state of the air conditioner (10) includes setting the operation state of the air conditioner (10) to a same operation state as the operation state of the air conditioner (10) associated with the zone (25) where the detected held meeting was held.

8. An operation control device (100) that is adapted to generate an operation plan for a plurality of air conditioners (10) respectively associated with a plurality of zones (25) in a room (20),
the operation control device (100) **characterized by** comprising:
an acquiring unit (153) configured to acquire operation result data indicating operation results of the plurality of air conditioners (10) and schedule data in which a schedule of a meeting is registered and a number of participants in the meeting;
a zone determining unit (153) configured to determine, based on the schedule data and the operation result data, a zone (25) where the scheduled meeting registered in the schedule data is held;
an operation-state determining unit (154) configured to determine, based on a number of participants in the meeting held in the determined zone (25), whether an operation state of the air conditioner (10) associated with the determined zone (25) is set to an energy saving operation state in which power consumption of the air conditioner (10) is reduced or a normal operation state in which the power consumption is not reduced;
a generating unit (154) configured to generate parameters for controlling the air conditioner (10), the parameters corresponding to the determined operation state; and
a transmitting unit (155, 110) configured to transmit the generated parameters to the air conditioner (10) associated with the determined zone (25).

9. An operation planning system comprising:
a plurality of air conditioners (10) respectively associated with a plurality of zones (25) in a room (20); and **characterized by** comprising
an operation control device (100) according to claim 8.

## Patentansprüche

1. Betriebsplanungsverfahren zum Erzeugen eines Betriebsplans für eine Vielzahl von Klimaanlagen (10) für jede einer Vielzahl von Zonen (25) in einem Raum (20), wobei die Vielzahl von Klimaanlagen (10) und die Vielzahl von Zonen (25) einander zugeordnet sind,
wobei das Betriebsplanungsverfahren **dadurch gekennzeichnet ist, dass** es umfasst:
einen Schritt des Erlangens von Betriebsergebnisdaten, die die Betriebsergebnisse der Vielzahl von Klimaanlagen (10) anzeigt;
einen Schritt des Erlangens von Zeitplandaten, in denen ein Zeitplan einer Besprechung und eine Anzahl von Teilnehmern an der Besprechung registriert werden;
einen Schritt des Bestimmens einer Zone (25), basierend auf den Zeitplandaten und den Betriebsergebnisdaten, in der die in den Zeitplandaten registrierte geplante Besprechung abgehalten wird;
einen Schritt des Bestimmens, basierend auf der Anzahl der Teilnehmer an der Besprechung, die in der bestimmten Zone (25) abgehalten wird, ob ein Betriebszustand der Klimaanlage (10), die der bestimmten Zone (25) zugeordnet ist, auf einen Energiesparbetriebszustand gesetzt wird, in dem der Stromverbrauch der Klimaanlage (10) reduziert wird, oder auf einen normalen Betriebszustand gesetzt wird, in dem der Stromverbrauch nicht reduziert wird;
einen Schritt des Erzeugens von Parametern zum Steuern der Klimaanlage (10), wobei die Parameter dem bestimmten Betriebszustand entsprechen; und
einen Schritt des Übertragens der erzeugten Parameter an die Klimaanlage (10), die der bestimmten Zone (25) zugeordnet ist.

2. Betriebsplanungsverfahren nach Anspruch 1, wobei der Schritt des Bestimmens der Zone (25) umfasst:
Erlangen der Anzahlen der Teilnehmer an in der Vergangenheit abgehaltenen Besprechungen aus den Zeitplandaten;
Erfassen einer abgehaltenen Besprechung, bei der die Anzahl der Teilnehmer gleich ist mit der Anzahl der voraussichtlichen Teilnehmer an der geplanten Besprechung oder eine Differenz zwischen der Anzahl der Teilnehmer in der abgehaltenen Besprechung und der Anzahl der voraussichtlichen Teilnehmern innerhalb eines vorgegebenen Bereichs liegt; und
Bestimmen einer Zone (25), in der die erfasste Besprechung stattgefunden hat, als die Zone (25), in der die geplante Besprechung abgehalten wird.

3. Betriebsplanungsverfahren nach Anspruch 1 oder 2, wobei der Schritt des Bestimmens des Betriebszustands der Klimaanlage (10) umfasst:
Bestimmen des Betriebszustands der Klimaanlage (10) als Energiesparbetriebszustand, wenn die Anzahl der voraussichtlichen Teilnehmer an der geplanten Besprechung kleiner ist, als ein vorgegebener Schwellenwert; und
Bestimmen des Betriebszustands der Klimaanlage (10) als den normalen Betriebszustand, wenn die Anzahl der voraussichtlichen Teilnehmer gleich oder größer als der Schwellenwert ist.

4. Betriebsplanungsverfahren nach einem der Ansprüche 1 bis 3, ferner umfassend einen Schritt des Benachrichtigens über einen Versammlungsort in der Zone (25), die im Schritt der Bestimmung der Zone (25) bestimmt wurde, an Endgeräte (50), die von den Teilnehmern der Besprechung getragen werden.

5. Betriebsplanungsverfahren nach Anspruch 2, wobei die Zeitplandaten Attributdaten enthalten, die ein Attribut der Besprechung angeben, und
der Schritt des Bestimmens der Zone (25) umfasst:
Erfassen der abgehaltenen Besprechung mit demselben Attribut wie das in der geplanten Besprechung festgelegte Attribut aus den Zeitplandaten der Vergangenheit; und
Bestimmen der Zone (25), in der die erfasste abgehaltene Besprechung stattgefunden hat, als die Zone (25), in der die geplante Besprechung stattfindet.

6. Betriebsplanungsverfahren nach Anspruch 5, wobei
eine Priorität in den Attributdaten festgelegt wird, und
wenn eine erste Besprechung und eine zweite Besprechung, die an einem Datum und zu einer Uhrzeit abgehalten werden sollen, die sich mit einem Datum und einer Uhrzeit der ersten Besprechung überschneiden, in einer selben Zone (25) festgelegt sind und die erste Besprechung und die zweite Besprechung nicht gleichzeitig in der Zone (25) abgehalten werden können, wird eine Besprechung, basierend auf den Attributdaten mit hoher Priorität, als eine Besprechung bestimmt, die in der festgelegten Zone (25) stattfindet.

7. Betriebsplanungsverfahren nach Anspruch 2, wobei der Schritt des Bestimmens des Betriebszustands der Klimaanlage (10) ein Einstellen des Betriebszustands der Klimaanlage (10) auf einen gleichen Betriebszustand wie der Betriebszustand der Klimaanlage (10), die der Zone (25) zugeordnet ist, in der die erfasste Besprechung stattgefunden hat.

8. Betriebssteuerungsvorrichtung (100), die dazu ausgestaltet ist, einen Betriebsplan für eine Mehrzahl von Klimaanlagen (10) zu erstellen, die jeweils einer Mehrzahl von Zonen (25) in einem Raum (20) zugeordnet sind,
wobei die Betriebssteuervorrichtung (100) **dadurch gekennzeichnet ist, dass** sie umfasst:
eine Erfassungseinheit (153), die dazu ausgestaltet ist, Betriebsergebnisdaten zu erlangen, die Betriebsergebnisse der Vielzahl von Klimaanlagen (10) und Zeitplandaten, in denen ein Zeitplan einer Besprechung und eine Anzahl von Teilnehmern an der Besprechung registriert ist, anzeigen;
eine Zonenbestimmungseinheit (153), die dazu ausgestaltet ist, basierend auf den Zeitplandaten und den Betriebsergebnisdaten eine Zone (25) zu bestimmen, in der die geplante Besprechung, die in den Zeitplandaten registriert ist, abgehalten wird;
eine Betriebszustandsbestimmungseinheit (154), die dazu ausgestaltet ist, basierend auf einer Anzahl von Teilnehmern an der Besprechung, die in der bestimmten Zone (25) stattfindet, zu bestimmen, ob ein Betriebszustand der der bestimmten Zone (25) zugeordneten Klimaanlage (10) auf einen Energiesparbetriebszustand gesetzt wird, in dem der Stromverbrauch der Klimaanlage (10) reduziert ist, oder auf einen normalen Betriebszustand, in dem der Stromverbrauch nicht reduziert wird;
eine Erzeugungseinheit (154), die dazu ausgestaltet ist, Parameter zum Steuern der Klimaanlage (10) zu erzeugen, wobei die Parameter dem bestimmten Betriebszustand entsprechen; und
eine Übertragungseinheit (155, 110), die dazu ausgestaltet ist, die erzeugten Parameter an die Klimaanlage (10) zu übertragen, die der bestimmten Zone (25) zugeordnet ist.

9. Betriebsplanungssystem, umfassend:
eine Vielzahl von Klimaanlagen (10), die einer Vielzahl von Zonen (25) in einem Raum (20) zugeordnet sind; und **dadurch gekennzeichnet, dass** es eine Betriebssteuerungsvorrichtung (100) nach Anspruch 8 umfasst.

## Revendications

1. Procédé de planification de fonctionnement pour générer un plan de fonctionnement pour une pluralité de climatiseurs (10) pour chacune d'une pluralité de zones (25) dans une pièce (20), la pluralité de climatiseurs (10) et la pluralité de zones (25) étant associés les uns aux autres,
le procédé de planification de fonctionnement étant **caractérisé en ce qu'**il comprend :
une étape d'acquisition de données de résultat de fonctionnement indiquant des résultats de fonctionnement de la pluralité de climatiseurs (10) ;
une étape d'acquisition de données de calendrier dans lesquelles un calendrier d'une réunion est enregistré et un nombre de participants à la réunion ;
une étape de détermination, sur la base des données de calendrier et des données de résultat de fonctionnement, d'une zone (25) où la réunion programmée enregistrée dans les données de calendrier est tenue ;
une étape de détermination, sur la base du nombre de participants dans la réunion tenue dans la zone déterminée (25), du fait qu'un état de fonctionnement du climatiseur (10) associé à la zone déterminée (25) est réglé ou non à un état de fonctionnement d'économie d'énergie dans lequel la consommation d'énergie du climatiseur (10) est réduite ou à un état de fonctionnement normal dans lequel la consommation d'énergie n'est pas réduite ;
une étape de génération de paramètres pour commander le climatiseur (10), les paramètres correspondant à l'état de fonctionnement déterminé ; et
une étape de transmission des paramètres générés au climatiseur (10) associé à la zone déterminée (25).

2. Procédé de planification de fonctionnement selon la revendication 1, l'étape de détermination de la zone (25) comprenant :
l'acquisition, à partir des données de calendrier dans le passé, des nombres de participants dans des réunions tenues dans le passé ;
la détection d'une réunion tenue, dont un nombre de participants est identique à un nombre de participants potentiels dans la réunion programmée ou dont une différence entre le nombre de participants et le nombre de participants potentiels se trouve dans une plage prédéfinie ; et
la détermination, en tant que zone (25) où la réunion programmée est tenue, d'une zone (25) où la réunion tenue détectée a été tenue.

3. Procédé de planification de fonctionnement selon la revendication 1 ou 2, l'étape de détermination de l'état de fonctionnement du climatiseur (10) comprenant :
la détermination de l'état de fonctionnement du climatiseur (10) en tant qu'état de fonctionnement d'économie d'énergie lorsque le nombre de participants potentiels dans la réunion programmée est inférieur à un seuil prédéfini ; et
la détermination de l'état de fonctionnement du climatiseur (10) en tant qu'état de fonctionnement normal lorsque le nombre de participants potentiels est supérieur ou égal au seuil.

4. Procédé de planification de fonctionnement selon l'une quelconque des revendications 1 à 3, comprenant en outre une étape de notification d'un lieu de réunion dans la zone (25) déterminée à l'étape de détermination de la zone (25) à des dispositifs terminaux (50) portés par les participants à la réunion.

5. Procédé de planification de fonctionnement selon la revendication 2,
les données de calendrier comprenant des données d'attribut indiquant un attribut de la réunion et
l'étape de détermination de la zone (25) comprenant :
la détection, à partir des données de calendrier dans le passé, de la réunion tenue présentant un même attribut que l'attribut défini dans la réunion programmée ; et
la détermination, en tant que zone (25) où la réunion programmée est tenue, de la zone (25) où la réunion tenue détectée a été tenue.

6. Procédé de planification de fonctionnement selon la revendication 5,
la priorité étant définie dans les données d'attribut et
lorsqu'une première réunion et une seconde réunion, programmées pour être tenues à une date et une heure chevauchant une date et une heure où la première réunion est tenue, sont définies dans une même zone (25) et que la première réunion et la seconde réunion ne peuvent pas être tenues simultanément dans la zone (25), une réunion définie sur la base des données d'attribut présentant une priorité élevée est déterminée en tant que réunion tenue dans la zone définie (25).

7. Procédé de planification de fonctionnement selon la revendication 2, l'étape de détermination de l'état de fonctionnement du climatiseur (10) comprenant le réglage de l'état de fonctionnement du climatiseur (10) dans un même état de fonctionnement que l'état de fonctionnement du climatiseur (10) associé à la zone (25) où la réunion tenue détectée a été tenue.

8. Dispositif de commande de fonctionnement (100) qui est conçu pour générer un plan de fonctionnement pour une pluralité de climatiseurs (10) respectivement associés à une pluralité de zones (25) dans une pièce (20),
le dispositif de commande de fonctionnement (100) étant **caractérisé en ce qu'**il comprend :
une unité d'acquisition (153) conçue pour acquérir des données de résultat de fonctionnement indiquant des résultats de fonctionnement de la pluralité de climatiseurs (10) et des données de calendrier dans lesquelles un calendrier d'une réunion est enregistré et un nombre de participants à la réunion ;
une unité de détermination de zone (153) conçue pour déterminer, sur la base des données de calendrier et des données de résultat de fonctionnement, une zone (25) où la réunion programmée enregistrée dans les données de calendrier est tenue ;
une unité de détermination d'état de fonctionnement (154) conçue pour déterminer, sur la base d'un nombre de participants dans la réunion tenue dans la zone déterminée (25), le fait qu'un état de fonctionnement du climatiseur (10) associé à la zone déterminée (25) est réglé ou non à un état de fonctionnement d'économie d'énergie dans lequel la consommation d'énergie du climatiseur (10) est réduite ou à un état de fonctionnement normal dans lequel la consommation d'énergie n'est pas réduite ;
une unité de génération (154) conçue pour générer des paramètres pour commander le climatiseur (10), les paramètres correspondant à l'état de fonctionnement déterminé ; et
une unité de transmission (155, 110) conçue pour transmettre les paramètres générés au climatiseur (10) associé à la zone déterminée (25).

9. Système de planification de fonctionnement comprenant :
une pluralité de climatiseurs (10) respectivement associés à une pluralité de zones (25) dans une pièce (20) ; et **caractérisé en ce qu'**il comprend un dispositif de commande de fonctionnement (100) selon la revendication 8.
